# EUROPÄISCHE PATENTSCHRIFT

(11) **EP 1 166 278 B1**
(45) Veröffentlichungstag und Bekanntmachung des Hinweises auf die Patenterteilung: **10.08.2005**
(21) Anmeldenummer: 00922434.6
(22) Anmeldetag: 15.03.2000
(51) Int. Cl.: G21C 19/317

(54) **REKOMBINATIONSEINRICHTUNG**
RECOMBINATION DEVICE
DISPOSITIF DE RECOMBINAISON

(30) Priorität: 31.03.1999 DE 19914814
(43) Veröffentlichungstag der Anmeldung: 02.01.2002
(73) Patentinhaber: Framatome ANP GmbH, 91058 Erlangen (DE)
(72) Erfinder: ECKARDT, Bernd, D-63486 Bruchköbel (DE); HILL, Axel, D-64589 Stockstadt (DE)
(74) Vertreter: Tergau, Enno, Dipl.-Ing.
(86) Internationale Anmeldenummer: PCT/DE2000/000798
(87) Internationale Veröffentlichungsnummer: WO 2000/060608

(56) Entgegenhaltungen:
- DE-A- 19 636 557
- DE-C- 19 704 608
- US-A- 5 301 217
- US-A- 5 495 511

## Beschreibung

Die Erfindung bezieht sich auf eine Rekombinationseinrichtung bei der mindestens eine Katalysatoranordnung in einem im Betriebsfall für das Gasgemisch durchströmbaren Gehäuse angeordnet ist, insbesondere für ein Kernkraftwerk.

Eine ähnliche Thematik ist in der gleichzeitig eingereichten Deutschen Anmeldung mit dem Anmeldeaktenzeichen 199 14 823.6 und dem Titel "Katalytisches Element zur Rekombination von Wasserstoff und/oder Kohlenmonoxid mit Sauerstoff" behandelt.

Nach einem Störfall mit Kühlmittelverlust können in einem Kernkraftwerk große Mengen Wasserstoff und Kohlenmonoxid in Sicherheitsbehälter (Containment) freigesetzt werden. Ohne Gegenmaßnahme kann Wasserstoff in der Atmosphäre des Sicherheitsbehälters so weit angereichert werden, daß sich ein detonationsfähiges Gemisch ausbilden kann. Bei einer späten zufälligen Zündung könnte vor allem durch die Verbrennung einer größeren Menge an Wasserstoff die Integrität des Sicherheitsbehälters gefährdet werden.

Um derartige explosive Gasgemische im Sicherheitsbehälter zu verhindern, werden verschiedene Einrichtungen diskutiert. Hierzu gehören beispielsweise Einrichtungen wie katalytische Rekombinatoren, katalytisch und elektrisch betriebenen Zündeinrichtungen oder die Kombination der beiden vorgenannten Einrichtungen. Die prinzipielle Funktionsweise von katalytischen Rekombinatoren ist beispielsweise aus der elektrochemischen Verfahrenstechnik bekannt und beispielsweise erläutert in: "Elektrochemische Verfahrenstechnik", DECHEMA Monographien, 1970-1992, Band 97, S. 363-376, Tagung der Fachgruppe angewandte Elektrochemie), Verlag Chanie.

Zur Beseitigung des Wasserstoffs und des Kohlenmonoxids aus der Atmosphäre des Sicherheitsbehälters (Containment-Atmosphäre) soll insbesondere eine frühzeitige und flammenlose Rekombination des Wasserstoffs und/oder des Kohlenmonoxids mit Sauerstoff erreicht werden. Dabei soll ein signifikanter Druckaufbau als Folge einer virulenten Wasserstoffverbrennung sicher vermieden sein. Eine dazu geeignete früh startende Rekombinationseinrichtung, die auch bei längerer Standzeit in der Containment-Atmosphäre nicht wesentlich an Aktivität verliert und bei niedrigen Umgebungstemperaturen passiv startet, ist aus der Deutschen Patentanmeldung DE 196 36 557 A1 bekannt. Mit einer derartigen Rekombinationseinrichtung ist eine "sanfte" Rekombination des Wasserstoffs z.B. in einer Phase der Containment-Atmosphäre möglich, die einen Dampf enthält und daher gegen spontane Entzündungen geschützt ist.

Aus der EP 0 527 968 B1 ist eine Rekombinationseinrichtung bekannt, bei der eine Anzahl von Katalysatorsystemen in Form von ebenen Platten, die beidseitig mit Katalysatormaterial wie Platin und/oder Palladium beschichtet sind, vorgesehen ist. Diese eignet sich besonders gut für den Wasserstoffabbau in der Atmosphäre des Sicherheitsbehälters eines Kernkraftwerks. Jedes Katalysatorsystem umfaßt dabei ein Trägerblech aus Edelstahl, das beidseitig eine dünne Schicht, deren Dicke im Mikrometerbereich liegt, aus insbesondere Platin und/oder Palladium aufweist. Eine Vielzahl solcher beschichteter Einzelplatten ist in einem Gehäuse, das als Modul aufgebaut sein kann, angeordnet. Das Gehäuse wird von unten mit dem zu überwachenden Gasstrom beströmt, und dieser Gasstrom verläßt das Gehäuse im oberen Bereich durch eine seitlich angebrachte Austrittsöffnung.

Aus der EP 0 436 942 A1 ist ein Rekombinatorsystem mit einer Gehäuseschutzeinrichtung bekannt, die sich in Abhängigkeit von einer äußeren Temperatur selbsttätig öffnet. In einem Bereitschaftszustand des Rekombinationssystems ist die Gehäuseschutzeinrichtung hingegen geschlossen, so daß eine Verschmutzung der katalytisch aktiven Oberfläche des Rekombinators vermieden ist.

Bei einer aus der EP 0 416 140 A1 bekannten Rekombinatoreinrichtung hingegen sind Filtermedien vorgesehen, die Schadstoffe aus der Umgebungsatmosphäre, wie beispielsweise Aerosole, zurückhalten und somit den Katalysator der Rekombinationseinrichtung gegen Verunreinigung schützen.

Weiterhin sind aus der Deutschen Patentanmeldung DE 37 25 290 Edelmetall-Legierungen bekannt, welche über ein Trägerblech oder Metallnetz die bei der Rekombination entstehende Reaktionswärme aufnehmen oder ableiten, wodurch eine Zündung des Gasgemisches vermieden werden soll.

Aus der EP 0 388 955 A1 ist eine Rekombinatoreinrichtung bekannt, bei der zusätzlich eine Zündvorrichtung zur Auslösung einer kontrollierten Wasserstoffverbrennung vorgesehen ist.

Jedes bekannte Rekombinatorsystem ist für eine besonders hohe Rekombinatorleistung bei besonders geringen Komponentenabmessungen sowie für eine hohe Resistenz gegenüber Verunreinigung ausgelegt. Für den Einsatz einer Rekombinationseinrichtung zur Rekombination von Wasserstoff in einem Gasgemisch in einem Kernkraftwerk ist darüber hinaus aber auch sicherzustellen, daß keine die Sicherheit des Kernkraftwerks negativ beeinflussenden Effekte auftreten können. Es ist zu berücksichtigen, daß eine zur Rekombination des Wasserstoffs eingesetzte Katalysatoranordnung einer Rekombinationseinrichtung sich in Folge der Rekombination üblicherweise erwärmt und aufgrund seiner erhöhten Temperatur zur Zündung des Gasgemisches innerhalb der Containment-Atmosphäre des Kernkraftwerks in ungewollter Weise beitragen könnte.

Der Erfindung liegt daher die Aufgabe zugrunde, eine Rekombinationseinrichtung zur katalytischen Rekombination von Wasserstoff und/oder Kohlenmonoxid mit Sauerstoff in einem Gasgemisch, insbesondere in der Atmosphäre in einem Sicherheitsbehälter einer Kernkraftanlage, anzugeben, bei dessen Betrieb eine ungewollte Zündung des Gasgemischs besonders sicher vermieden ist.

Bezüglich der Rekombinationseinrichtung zur katalytischen Rekombination von Wasserstoff und/oder Kohlenmonoxid mit Sauerstoff in einem Gasgemisch, bei der mindestens eine Katalysatoranordnung in einem im Betriebsfall für das Gasgemisch durchströmbaren Gehäuse angeordnet ist, und bei der die Katalysatoranordnung in Strömungsrichtung des Gasgemisches gesehen mehrere Teilbereiche aufweist, wird die genannte Aufgabe erfindungsgemäß dadurch gelöst, daß in Anströmrichtung ein erster Teilbereich einen Katalysatorkörper mit einer umgebenden Drosselschicht zur Hemmung der Diffusion der zu- und/oder abströmenden Reaktionsgase umfaßt, und wobei ein an den ersten Teilbereich anschließender zweiter Teilbereich mindestens einen den Reaktionsgasen unmittelbar zugänglichen Katalysatorkörper umfaßt. Hierbei werden also in der Rekobinationseinrichtung die Eigenschaften des ersten und des zweiten Teilbereichs, bevorzugt nacheinander, ausgenutzt. Somit ist in der mehrere Teilbereiche umfassende Katalysatoranordnung eine mehrstufige katalytische Oxidation ermöglicht. Dabei werden die verschiedenen Teilbereiche derart ausgelegt, daß die entlang der Strömungsrichtung des Gasgemischs auftretenden verschiedenen Reaktionsbedingungen berücksichtigt werden. Insbesondere wird der im Einströmbereich der Katalysatoranordnung erste Teilbereich hinsichtlich des dort einströmenden hochexplosiven Gasgemischs besonders entzündungshemmend ausgebildet sein. Dagegen steht für die im oberen Strömungsbereich angeordneten Teilbereiche eine besonders hohe katalytische Aktivität im Vordergrund, da das Gasgemisch bereits teilweise gereinigt ist und demzufolge die zu einer Entzündung führende Konzentration der Reaktionsgase, z.B. eine über 8 Vol.% liegende H2-Konzentration, bereits deutlich unterschritten ist. Alternativ können verschiedenartige Teilbereiche auch alternierend entlang der Strömungsrichtung des Gasgemisches angeordnet sein.

Bevorzugt kann ein Katalysatorkörper im zweiten Teilbereich ausgesucht sein, der eine höhere katalytische Aktivität besitzt als der Katalysatorkörper im ersten Teilbereich. Dies kann z.B. durch Auswahl eines Katalysators mit einer höheren Dichte an Aktivitätszentren - höherer Anteil an katalytisch aktiven Material - ermöglicht sein, wodurch eine stärkere katalytische Aktivität und somit ein verstärkte katalytische Reaktion in dem betreffenden Teilbereich erzielt ist. Je nach der Stärke der katalytischen Aktivität kann der zweite Teilbereich zusätzlich mit einer Flammensperreinrichtung ummantelt sein. Die Flammensperreinrichtung hat dabei eine Spaltweite von höchstens 0,7 mm, vorzugsweise von kleiner 0,3 mm. Durch die unmittelbare Aufbringung der Flammensperreinrichtung auf den zweiten Teilbereich sowie zusätzlich durch eine Vergrößerung der Flammensperreinrichtung auf den ersten, besonders diffusionshemmenden Teilbereich ist eine besonders gute Wärmeübertragung aus der zweiten Reaktionszone des zweiten Teilbereichs in die erste Reaktionszone des ersten Teilbereichs - und somit ein schneller Start der katalytischen Reaktion auch in der ersten Reaktionszone - erreicht.

Der Katalysatorkörper kann aus mehreren Einzelteilen, z.B. zusammengepreßten oder gesinterten Fasern, bestehen. Zweckmäßigerweise umfaßt der Katalysatorkörper im zweiten Teilbereich ein plattenförmiges Trägerblech, das mit einem Katalysatormaterial beschichtet ist. Das Trägerblech ist beispielsweise aus einem nicht-rostenden Edelstahl. Dabei weist das Trägerblech eine Blechdicke von weniger oder gleich 0,2 mm auf. Alternativ kann der Katalysatorkörper eine ebene Platte, eine perforierte Platte oder eine Kugel als mechanischen Träger umfassen. Je nach Funktion und Art der katalytischen Rekombination kann der mechanische Träger metallisch oder keramisch ausgeführt sein. Bei einer keramischen Ausführung handelt es sich beispielsweise um Washcoat (Al₂O₃).

Für eine besonders effektive Rekombination des im Gasgemisch geführten Wasserstoffs enthält das Katalysatormaterial ein katalytisches Edelmetall, insbesondere Platin oder Palladium. Platin ist dabei besonders temperaturbeständig und resistent gegen Katalysatorgifte. Darüber hinaus kann mit Platin als katalytisch aktives Material neben Wasserstoff auch Kohlenmonoxid rekombiniert werden. Palladium eignet sich insbesondere aufgrund seiner Eigenschaft, bei besonders geringen Umgebungstemperaturen anzuspringen. Im ersten Teilbereich kann somit beispielsweise bevorzugt ein Edelmetall ausgesucht sein, daß giftresistenter ist als das Edelmetall im zweiten Teilbereich. Bevorzugt ist das Katalysatormaterial mit Hilfe einer Haftvermittlerschicht und/oder einer Zwischenschicht auf den mechanischen Träger aufgetragen.

Bei einer besonders vorteilhaften Ausgestaltung ist die Drosselschicht, die insbesondere porös ausgebildet ist, im ersten Teilbereich eine Schüttung, in welche der Katalysatorkörper angeordnet ist. Dabei durchströmt ein Teilstrom des Gasgemischs den in der Schüttung angeordneten Katalysatorkörper (durchströmte Alternative). Der Katalysatorkörper des zweiten Teilbereichs ist dabei getrennt von dem Katalysatorkörper des ersten Teilbereichs angeordnet. Beispielsweise sind die beiden Katalysatorkörper in Strömungsrichtung des Gasgemischs nacheinander angeordnet. Die Dimensionierung der Porösität der Schüttung erfolgt dabei derart, daß bei Vorliegen eines besonders explosiven Gasgemischs im Einströmbereich von H₂-Konzentrationen größer 10 Vol.% im Ausströmbereich des ersten Teilbereichs die H₂-Konzentration auf kleiner 6 Vol.% reduziert ist. Zur Kompensation von Druckverlusten in dem durchströmbaren Gehäuse kann die Anströmfläche um das 2- bis 5-fache vergrößert sein. Bei einer Gehäusehöhe von 0,2 bis 2 m ist dann bevorzugt eine Durchströmgeschwindigkeit des Gasgemischs von 0,1 bis 1 m/s im Bereich der Katalysatoranordnung erzielt.

Bei einer weiteren vorteilhaften Ausgestaltung ist die Drosselschicht im ersten Teilbereich auf den Katalysatorkörper als poröse Deckschicht aufgetragen. Bei dieser als umströmte Alternative bezeichneten Katalysatoranordnung sind der Katalysatorkörper im ersten und im zweiten Teilbereich von einem durchgehenden Körper gebildet, d.h. dieser Körper erstreckt sich sowohl über den ersten als auch über den zweiten Teilbereich. Somit wird der Katalysatorkörper vom gesamten Strom des Gasgemischs umströmt. Im Einströmbereich wird durch die auf den ersten Teilbereich aufgetragene Drosselschicht eine Hemmung der Diffusion von zu- und/oder abströmenden Reaktionsgasen erreicht. Somit ist die katalytische Rekombination der Reaktionsgase begrenzt, was wiederum zu einer Begrenzung der Reaktionstemperatur auch bei hohen H₂-Konzentrationen führt. Vorteilhafterweise ist die ebenfalls die katalytische Reaktion beeinflussende Geschwindigkeit des um- oder überströmenden Gasgemischs durch eine vorgegebene Geometrie des Gehäuses einstellbar. Bevorzugt ist bei einer Gehäusehöhe von 0,2 bis 2 m eine Überströmgeschwindigkeit des Gasgemischs von 0,1 bis 2 m/s im Bereich der Katalysatoranordnung eingestellt.

Für einen besonders hohen Reaktionsumsatz sind zweckmäßigerweise mehrere gleichartige Katalysatoranordnungen parallel zueinander angeordnet sind. Bei der umströmten Alternative sind beispielsweise benachbarte Katalysatoranordnungen mit den jeweils zugehörigen ersten und zweiten Teilbereichen zueinander parallel angeordnet. Dabei weist jede Katalysatoranordnung im ersten Teilbereich eine zugehörige Drosselschicht auf. Bei der durchströmten Alternative der Katalysatoranordnungen sind z. B. mehrere gleichartige erste Teilbereiche parallel zueinander angeordnet und von einer gemeinsamen Drosselschicht umgeben. Die zugehörigen zweiten Teilbereiche sind von den ersten Teilbereichen getrennt und ebenfalls zueinander parallel angeordnet. Alternativ dazu können verschiedenartige Katalysatoranordnungen alternierend angeordnet sein. Durch eine Kombination von Katalysatoranordnungen mit ersten und zweiten oder mehreren Teilbereichen , wobei insbesondere ein Teilbereich eine ungedrosselte und ein weiterer Teilbereich eine diffusionsgedrosselte Reaktion ermöglicht, ist eine besonders sichere und aktive katalytische Rekombination in mehreren Stufen erreicht. Durch dies mehrstufige Rekombination wird in den einzelnen Teilbereichen oder Strömungskanälen ein besonders sicherer Schutz vor Zündung oder Entflammung bei gleichzeitig hohem Reaktionsumsatz auch bei weniger explosiven Gasgemischen erzielt.

Zweckmäßigerweise sind die Katalysatoranordnungen plattenförmig ausgebildet, besitzen jeweils eine Gesamtdicke von höchstens 1 cm, vorzugsweise ca. 0,3 mm, und weisen einen gegenseitigen Abstand von weniger als 20 mm auf.

Um auch bei sogenannten Aufwinden des zuströmenden Gasgemischs mit besonders hohen Geschwindigkeiten eine homogene Rekombination, insbesondere eine mehrstufige Oxidation, zu gewährleisten, ist in Anströmrichtung des Gasgemisches der Katalysatoranordnung ein Aufwindschutz vorgeschaltet. Der Aufwindschutz kann bereits einen Teil des Katalysatorkörpers enthalten. Er vergrößert besonders vorteilhaft die Querschnittsfläche der Rekombinationseinrichtung am Eingang auf das 1- bis 5-fache. Hierdurch ist eine besonders einfache Strömungsbegrenzung des einströmenden Gasgemischs erzielt. Dies wiederum bewirkt eine kontinuierliche Zuführung des Gasgemischs, wodurch ein Verschieben der Reaktionszone sicher vermieden ist. Zur Reduzierung und ggf. Kompensation von im Gehäuse auftretenden Druckverlusten weist das Gehäuse bevorzugt eine Höhe von 0,2 bis 2 m auf.

Um bei einer möglicherweise auftretenden Strömungsumkehr innerhalb der Rekombinationseinrichtung - bei sogenannten Abwinden - einen besonders sicheren Betrieb zu erreichen, ist in Abströmrichtung des Gasgemisches am Ende der Katalysatoranordnung ein Abwindschutz angeordnet. Bei besonders extremen Strömungsverhältnissen mit wechselnden Strömungsrichtungen kann zusätzlich im Abströmbereich eine partielle Reaktionsflächenabdeckung vorgesehen sein, die wie der Aufwindschutz eine Oberflächenvergrößerung bewirkt.

Nach einer weiteren vorteilhaften Ausgestaltung ist mindestens im Einströmbereich des ersten Teilbereichs eine Teflonbeschichtung auf der Drosselschicht vorgesehen. Die Frühstartfähigkeit, insbesondere bei feuchten Umgebungsbedingungen, kann durch eine solche örtlich begrenzte Teflonbeschichtung zur Erzeugung lokaler hydrophober Eigenschaften des Katalysatorkörpers führen. Durch die quantitative Begrenzung der Teflonbeschichtung kann eine reaktionsrelevante Adsorption von Wasser innerhalb der Poren- oder Drosselschicht vermieden und somit eine Verbesserung der Frühstartfähigkeit (passiver Reaktionsstart) erzielt werden.

Die mit der Erfindung erzielten Vorteile bestehen insbesondere darin, daß durch mindestens zwei unterschiedliche Teilbereiche der Katalysatoranordnung eine besonders sichere, insbesondere ohne Zündung, und eine besonders aktive katalytische Rekombination sowohl bei hochexplosiven Gasgemischen (hohe H₂-Konzentration bis 15 Vol.%) als auch bei weniger explosiven Gasgemischen (niedrige H₂-Konzentration von ca. 1 Vol.%) erreicht ist.

Ausführungsbeispiele der Erfindung werden anhand einer Zeichnung näher erläutert. Darin zeigen:
- FIG 1: eine Rekombinationseinrichtung zur katalytischen Rekombination von Wasserstoff und/oder Kohlenmonoxid mit Sauerstoff in einem Gasgemisch mit einer Katalysatoranordnung,
- FIG 2: einen Ausschnitt II aus Figur 1,
- FIG 3: den funktionalen Verlauf der Konzentration und der Reaktionstemperatur in Abhängigkeit vom Strömungsweg entlang der Katalysatoranordnung,
- FIG 4: eine alternative Rekombinationseinrichtung zur katalytischen Rekombination von Wasserstoff und/oder Kohlenmonoxid mit Sauerstoff in einem Gasgemisch mit einer Katalysatoranordnung, und
- FIG 5: einen Ausschnitt V aus Figur 4.

Einander entsprechende Teile sind in allen Figuren mit den gleichen Bezugszeichen versehen.

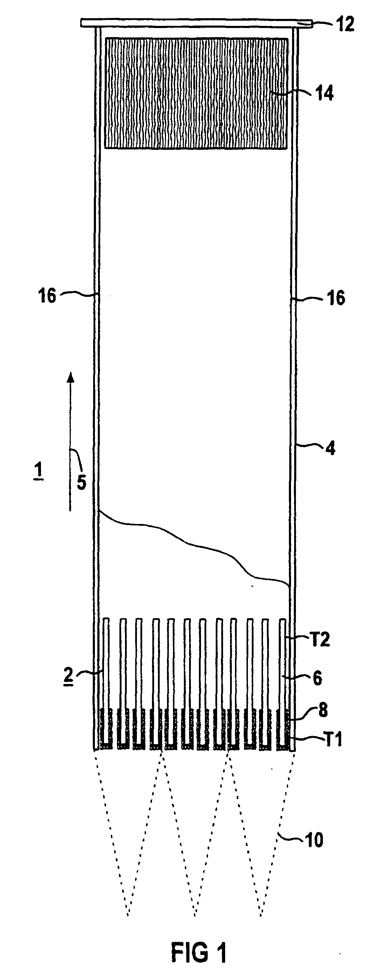

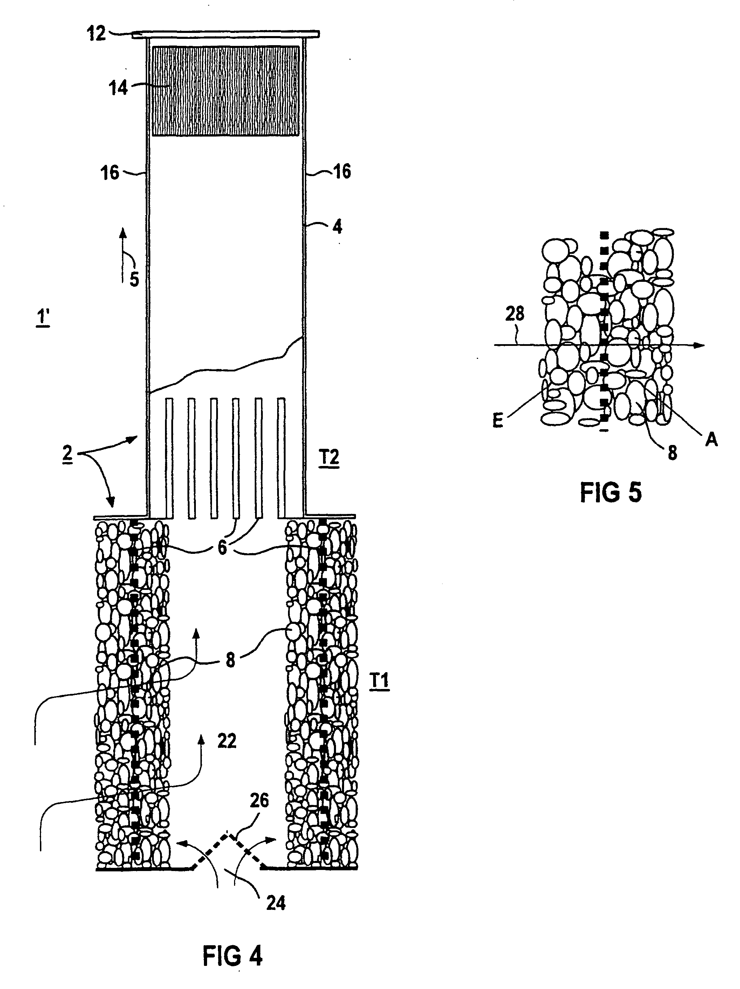

Die Rekombinationseinrichtung 1 gemäß Figur 1 und die Rekombinationseinrichtung 1' gemäß Figur 4 sind jeweils zur katalytischen Rekombination von Wasserstoff und/oder Kohlenmonoxid mit Sauerstoff in einem Gasgemisch, nämlich in der Containment-Atmosphäre eines nicht näher dargestellten Kernkraftwerks bei einem Störfall, vorgesehen.

Die Rekombinationseinrichtung 1 umfaßt eine Mehrzahl von Katalysatoranordnungen 2, die annähernd parallel in einem Abstand von höchstens 20 mm zueinander angeordnet sind. Je nach Art und Funktion der Rekombinationseinrichtung 1 kann auch eine einzelne Katalysatoranordnung 2 vorgesehen sein. Darüber hinaus können mehrere gleichartige oder verschiedenartige Katalysatoranordnungen 2 vorgesehen sein

Die Katalysatoranordnungen 2 sind in einem Gehäuse 4 angeordnet. Das Gehäuse 4 ist dabei derart ausgebildet, daß der Rekombinator 1, 1' im Betriebsfall für das Gasgemisch in freier Konvektion durchströmbar ist. Dazu bildet das Gehäuse 4 entlang einer im wesentlichen vertikalen, durch den Pfeil 5 angedeuteten Vorzugsrichtung einen Schacht. Der in Folge der Wärmeentwicklung bei der Rekombination des Gasgemischs im Bereich der Katalysatoranordnung 2 verursachte Auftrieb bewirkt im Betriebsfall der Rekombinationseinrichtung 1, 1' eine Überkompensation des Druckabfalls für das Gasgemisch, so daß in Folge einer Kaminwirkung des schachtartig ausgestalteten Gehäuses 4 eine Durchströmung des Gasgemischs durch die Rekombinationseinrichtung 1, 1' ohne äußere Hilfs- oder Antriebsmittel einsetzt. Der schachtartig ausgebildete Teil des Gehäuses 4 weist dabei eine Höhe zwischen 0,2 und 2 m zur Kompensation der verursachten Druckverluste auf. Für ein besonders günstiges Konvektionsverhalten weist das Gehäuse 4 zudem zweckmäßigerweise ein Höhen-zu-Tiefen-Verhältnis zwischen 0,3 und 10 auf.

Die Rekombinationseinrichtung 1, 1' ist derart ausgestaltet, daß auch bei den in Folge der Wärmefreisetzung bei der Rekombination von Wasserstoff im Bereich der Katalysatoranordnungen 2 auftretenden hohen Temperaturen eine Zündung zündfähigen Gasgemischs im Bereich außerhalb der Rekombinationseinrichtung 1, 1' sicher vermieden ist. Dazu weist jede Katalysatoranordnung 2 in Strömungsrichtung des Gasgemischs gesehen mindestens zwei Teilbereiche - einen ersten Teilbereich T1 und einen zweiten Teilbereich T2 - auf. Je nach Art und Funktion der Rekombinationseinrichtung 1, 1' können auch mehr als zwei Teilbereiche vorgesehen sein.

Für die katalytische Rekombination umfaßt jede Katalysatoranordnung 2 sowohl im ersten Teilbereich T1 als auch im zweiten Teilbereich T2 einen Katalysatorkörper 6, der ein für die Rekombination geeignetes katalytisch aktives Material umfaßt. Als katalytisch aktives Material kann dabei insbesondere ein Edelmetall, eine Mischung aus Edelmetallen oder auch eine Anordnung aus Edelmetallfolien vorgesehen sein. Als Edelmetall sind dabei insbesondere Platin und/oder Palladium vorgesehen.

Um eine Zündung des insbesondere im Einströmbereich hochexplosiven Gasgemischs zu vermeiden, ist der Katalysatorkörper 6 im ersten Teilbereich T1 von einer Drosselschicht 8 zur Hemmung der Diffusion der zu- und/oder abströmenden Reaktionsgase umgeben. In dem zweiten Teilbereich T2 sind die Reaktionsgase dem Katalysatorkörper 6 unmittelbar zugänglich. Dabei wird das Gasgemisch im ersten Teilbereich T1 entlang der Drosselschicht 8 und im zweiten Teilbereich T2 entlang des Katalysatorkörpers 6 geführt.

Die katalytische Rekombination in dem in Strömungsrichtung des Gasgemischs gesehen ersten Teilbereich T1 erfolgt aufgrund der den Katalysatorkörper 6 umgebenden Drosselschicht 8 gedrosselt. D.h. in dem ersten Teilbereich T1 wird bevorzugt das Zuströmen der Reaktionsgase, z.B. CO, H₂, O₂, CO₂, gehemmt, so daß nur eine Teiloxidation durchgeführt wird. Die wiederum bewirkt, daß die katalytische Rekombination gebremst und somit die Reaktionstemperatur niedrig, insbesondere unterhalb von 560 °C, gehalten wird. Die Länge des Teilbereichs T1 ist maßgeblich bestimmt durch die Konzentration des zuströmenden Reaktionsgases. Insbesondere wird der Gehalt des im Gasgemisch geführten Wasserstoffs im ersten Teilbereich T1 durch katalytische Oxidation auf weniger als 5 Vol.% reduziert.

Somit strömt in die nachfolgende katalytische Zone, d.h. in den zweiten Teilbereich T2, ein Gasgemisch ein, dessen Konzentration am Reaktionsgas unterhalb der Zündkonzentration liegt. Dies führt bevorzugt dazu, daß das Gasgemisch im zweiten Teilbereich T2 dem Katalysatorkörper 6 unmittelbar zugänglichen ist. Dabei ist der zweiter Teilbereich T2 katalytisch aktiver als der Teilbereich T1, indem der Katalysatorkörper 6 im zweiten Teilbereich T2 katalytisch aktiveres Material umfaßt. Die Reaktionstemperatur im zweiten Teilbereich T2 beträgt demzufolge mehr als 560 °C. Die beiden Teilbereiche - erster Teilbereich T1 und zweiter Teilbereich T2 - ermöglichen wie dargelegt katalytisch unterschiedlich aktive Zonen, wodurch eine mehrstufige katalytische Oxidation der Reaktionsgase ermöglicht ist. Je nach Stärke der katalytischen Aktivität kann der zweite Teilbereich T2 zusätzlich von einer nicht dargestellten Flammensperreinrichtung ummantelt sein.

Um auch bei sogenannten Aufwinden des zuströmenden Gasgemischs mit besonders hohen Geschwindigkeiten eine homogene Rekombination, insbesondere eine mehrstufige Oxidation, zu gewährleisten, ist in Anströmrichtung des Gasgemisches der Katalysatoranordnungen 2 ein Aufwindschutz 10 angeordnet. Der Aufwindschutz 10 vergrößert besonders vorteilhaft die Querschnittsfläche am Eingang der Rekombinationseinrichtung 1 auf das 1- bis 5-fache.

Um bei einer möglicherweise auftretenden Strömungsumkehr innerhalb der Rekombinationseinrichtung 1, 1' - bei sogenannten Abwinden - einen besonders sicheren Betrieb zu erreichen, ist in Abströmrichtung des Gasgemisches am oberen Ende des Gehäuses 4 ein Abwindschutz 12 vorgesehen. Der Abwindschutz 12 dient gleichzeitig als Gehäusedach und damit als tropfenabweisende Begrenzung für die Rekombinationseinrichtung 1, 1'. Somit ist auch beim Betrieb eines Spraysystems oberhalb der Rekombinationseinrichtung 1, 1' ein Direkteintrag von Flüssigkeitstropfen in die Rekombinationseinrichtung 1, 1' vermieden.

Darüber hinaus umfaßt die Rekombinationseinrichtung 1, 1' in Strömungsrichtung des Gasgemischs gesehen unterhalb des Abwindschutzes 12 einen Filter 14. Dieser Filter 14, der den Katalysatoranordnungen 2 innerhalb des Gehäuses 4 nachgeschaltet ist, dient der Filterung von groben Partikeln. Beispielsweise ist der Filter 14 aus einem Geflecht dünner Drähte aufgebaut. Das Geflecht weist dabei eine Maschenweite auf, die unter Berücksichtigung des Druckverlustes in der Rekombinationseinrichtung 1, 1' und der erforderlichen Abscheideleistung besonders klein, bevorzugt kleiner als 800 µm, gewählt ist. Als weiteres Auslegungskriterium bei der Dimensionierung der Maschenweite ist zudem berücksichtigt, daß am Filter 14 keine Abscheidung von Katalysatorgiften, wie Aerosolen oder Kolloiden erfolgen soll. Der Filter 14 ist vielmehr derart dimensioniert, daß Aerosole oder Kolloide quantitativ und ohne nennenswerte Abscheideverluste penetrieren können. Eine Verblockungsgefahr aufgrund sich ablagernder Aerosole oder Kolloide ist somit sicher vermieden.

Das Gehäuse 4 weist darüber hinaus einen Isoliermantel 16 auf. Beispielsweise kann der Isoliermantel 16 in der Art einer Doppelmantelausführung als Luftspalt ausgebildet sein. Alternativ kann auch ein zwischen zwei Mantelschichten angeordneter temperatur- und strahlungsbeständiger Isolierstoff vorgesehen sein. Ein Austritt von Strahlung durch den Isoliermantel 16 ist somit sicher vermieden. Insbesondere ist der in einem Temperaturbereich von mehr als 500 °C relevante Wärmetransport durch die Ausgestaltung des Isoliermantels 16 in einem hohen Maße unterbunden. Eine Zündung des das Gehäuse 4 umgebenden Gasgemischs (Containment-Atmosphäre) aufgrund einer hohen Gehäusetemperatur ist somit sicher vermieden.

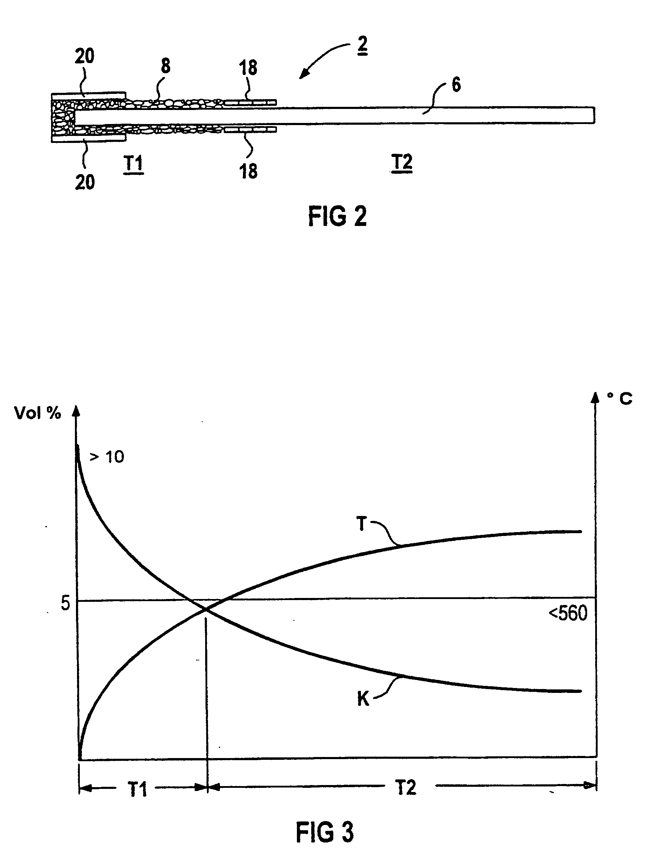

Figur 2 zeigt eine Katalysatoranordnung 2 gemäß Figur 1 mit einem Katalysatorkörper 6. Die Katalysatoranordnung 2 ist plattenförmig ausgebildet und besitzt eine Gesamtdicke von höchstens 1 cm, insbesondere bei einer keramischen Ausführung. Vorzugsweise beträgt die Gesamtdicke ca. 0,3 mm. Der erste Teilbereich T1 umfaßt die Drosselschicht 8, die den Katalysatorkörper 6 umgibt. Die Drosselschicht 8 ist dabei als poröse Deckschicht ausgebildet, die auf den Katalysatorkörper 6 aufgetragen ist. Die Porigkeit der Drosselschicht 8 bewirkt eine Bindung der zuströmenden Reaktionsgase und somit eine Begrenzung der katalytischen Reaktion auf geringe Teilmengen pro Flächeneinheit im ersten Teilbereich T1. Der zweite Teilbereich T2 weist darüber hinaus eine Anreicherung an besonders aktiven katalytischen Material auf, das beispielsweise als eine Schicht 18 auf den Katalysatorkörper 6 aufgetragen ist. Diese örtlich begrenzte Anreicherung von katalytisch aktivem Material unterstützt die Startfunktion der Katalysatoranordnung 2. Die Schicht 18 enthält dabei insbesondere Platin oder Palladium. Alternativ kann das katalytisch aktive Material auch in der Oberfläche des Katalysatorkörpers 6 angeordnet sein.

Nach einer weiteren vorteilhaften Ausgestaltung ist mindestens im Einströmbereich des ersten Teilbereichs T1 eine Teflonbeschichtung 20 auf der Drosselschicht 8 vorgesehen, die den Zutritt der Reaktionsgase nur geringfügig behindert. Durch die örtliche Begrenzung der Teflonbeschichtung 20 kann eine reaktionsrelevante Adsorption von Wasser innerhalb der Poren- oder Drosselschicht 8 vermieden und somit eine Verbesserung der Frühstartfähigkeit (passiver Reaktionsstart) erzielt werden.

Die Figur 3 zeigt den funktionalen Verlauf der H₂-Konzentration K und der Reaktionstemperatur T in Abhängigkeit vom Strömungsweg des Gasgemischs entlang der Katalysatoranordnung 2 für den erwähnten "worst case". Im Betrieb der Katalysatoranordnung 2 wird die H₂-Konzentration K im ersten Teilbereich T1 von deutlich über 10 Vol.% auf mindestens 5 Vol.% durch katalytische Oxidation reduziert, wobei die Reaktionstemperatur T im ersten Teilbereich T1 unterhalb von 560 °C bleibt und somit die Zündtemperatur des Reaktionsgases an der Katalysatoranordnung 2 unterschreitet.

Im zweiten Teilbereich T2 steigt die Reaktionstemperatur T aufgrund der höheren katalytischen Aktivität an, insbesondere wird die Zündtemperatur von 560 °C überschritten. Da jedoch die Konzentration K im zweiten Teilbereich T2 deutlich unterhalb der Zündkonzentration von größer 5 Vol.% liegt, ist eine Entzündung des Gasgemischs sicher vermieden. Die in der Figur 3 dargestellten Funktionsverläufe sind charakteristisch sowohl für die Rekombinationseinrichtung 1 gemäß Figur 1 als auch für die Rekombinationseinrichtung 1' gemäß Figur 4.

Figur 4 zeigt die Rekombinationseinrichtung 1' mit einer alternativen Katalysatoranordnung 2. Dabei sind der erste Teilbereich T1 und der zweite Teilbereich T2 getrennt voneinander angeordnet. Der erste Teilbereich T1 umfaßt dabei eine Mehrzahl von parallel zueinander angeordneten Katalysatorkörpern 6, die von der Drosselschicht 8 gemeinsam umgeben sind. Dazu ist die Drosselschicht 8 eine lose Schüttung, in welche die Katalysatorkörper 6 angeordnet sind. In Abhängigkeit von der Art und der Funktion der Rekombinationseinrichtung 1' können mehrere gleichartige erste Teilbereich 1 vorgesehen sein, die wie in Figur 4 dargestellt in Strömungsrichtung des Gasgemischs gesehen zueinander parallel unter Bildung eines Zwischenraums 22 angeordnet sind. Alternativ können auch verschiedenartige Teilbereiche T1, T2 alternierend angeordnet sein.

Der zweite Teilbereich T2 umfaßt ebenfalls eine Mehrzahl von Katalysatorkörpern 6, die dem ersten Teilbereich T1 nachgeschaltet sind. Dabei sind die Katalysatorkörper 6 in Strömungsrichtung des Gasgemischs gesehen parallel zueinander angeordnet. Je nach Art und Funktion der Rekombinationseinrichtung 1' kann es sich bei den Katalysatorkörpern 6 des ersten Teilbereichs T1 und des zweiten Teilbereichs T2 hinsichtlich der katalytischen Aktivität um gleichartige Katalysatoren handeln. Die Katalysatorkörper 6 können aber auch innerhalb des ersten Teilbereichs T1 und/oder des zweiten Teilbereichs T2 durch verschiedene katalytische Materialien in der katalytischen Aktivität variieren.

Zur Rekombination des Gasgemischs durchströmt dieses zum einen die beiden ersten Teilbereiche T1 und gelangt mit geringerer H₂-Konzentration in den Zwischenraum 22. Zum anderen gelangt gleichzeitig über eine zwischen den beiden ersten Teilbereichen T1 angeordnete Zuführung 24 ungereinigtes Gasgemisch in den Zwischenraum 22. In dem Zwischenraum 22 wird das ungereinigte Gasgemisch mit dem bereits gereinigten Gasgemisch vermischt, wodurch eine bestimmte H₂-Konzentration ausgangsseitig im Zwischenraum 22 eingestellt ist, die bevorzugt unterhalb der Zündkonzentration von 5 Vol.% liegt. Das aus dem Zwischenraum 22 ausströmende Gasgemisch wird anschließend im zweiten Teilbereich T2 entlang der Katalysatorkörper 6 zur weiteren katalytischen Oxidation geleitet.

In der Zuführung 24 ist ein Gitter 26 angeordnet, welches die Zuströmung von ungereinigtem Gasgemisch begrenzt. Als Gitter 26 dient beispielsweise ein Drahtgeflecht. Es können aber auch mehrere Drahtgeflechte oder Metallgitter hintereinander geschaltet werden, wodurch eine besonders kleine Spaltweite von höchstens 100 µm, vorzugsweise ca. 2 µm, erreicht ist.

Hierdurch werden auch feine Partikel wie Katalysatorgifte, insbesondere Aerosole, quantitativ penetriert.

Figur 5 zeigt die geschüttete Drosselschicht 8 gemäß Figur 4. Die geschüttete Drosselschicht 8 weist vorzugsweise eine Korngröße von 1 bis 10 mm, insbesondere von 1 bis 5 mm, auf. Dabei weist in Strömungsrichtung des Gasgemischs gesehen (durch den Pfeil 28 angedeutet) die Drosselschicht 8 im Einströmbereich E eine größere Korngröße auf als im Ausströmbereich A. Hierdurch ist die Drosselschicht 8 besonders diffusionshemmend und flammsperrend ausgeführt.

## Patentansprüche

1. Rekombinationseinrichtung zur katalytischen Rekombination von Wasserstoff und/oder Kohlenmonoxid mit Sauerstoff in einem Gasgemisch, bei der mindestens eine Katalysatoranordnung (2) in einem im Betriebsfall für das Gasgemisch durchströmbaren Gehäuse (4) angeordnet ist, wobei die Katalysatcranordnung (2) in Strömungsrichtung des Gasgemisches gesehen mehrere Teilbereiche (T1, T2) aufweist,
**dadurch gekennzeichnet, daß** in Anströmrichtung der erste Teilbereich (T1) einen Katalysatorkörper (6) mit einer umgebenden Drosselschicht (8) zur Hemmung der Diffusion der zu- und/oder abströmenden Reaktionsgase umfaßt, und der sich an den ersten Teilbereich (T1) anschließende zweite Teilbereich (T2) mindestens einen den Reaktionsgasen unmittelbar zugänglichen Katalysatorkörper (6) umfaßt.

2. Rekombinationseinrichtung nach Anspruch 1,
**dadurch gekennzeichnet, daß** der Katalysatorkörper (6) im zweiten Teilbereich (T2) eine höhere Aktivität besitzt als der Katalysatorkörper (6) im ersten Teilbereich (T1).

3. Rekombinationseinrichtung nach Anspruch 1 oder 2,
**dadurch gekennzeichnet, daß** der Katalysatorkörper (6) im zweiten Teilbereich (T2) ein plattenförmiges Trägerblech, das mit einem Katalysatormaterial beschichtet ist, umfaßt.

4. Rekombinationseinrichtung nach Anspruch 3,
**dadurch gekennzeichnet, daß** das Katalysatormaterial ein katalytisches Edelmetall, insbesondere Platin oder Palladium, enthält.

5. Rekombinationseinrichtung nach einem der Ansprüche 1 bis 4,
**dadurch gekennzeichnet, daß** im ersten Teilbereich (T1) die Drosselschicht (8), die insbesondere porös ausgebildet ist, eine Schüttung ist, in welche der Katalysatorkörper (6) angeordnet ist.

6. Rekombinationseinrichtung nach einem der Ansprüche 1 bis 4,
**dadurch gekennzeichnet, daß** im ersten Teilbereich (T1) die Drosselschicht (8) auf den Katalysatorkörper (6) als poröse Deckschicht aufgetragen ist.

7. Rekombinationseinrichtung nach einem der Ansprüche 1 bis 6,
**dadurch gekennzeichnet, daß** mehrere gleichartige Katalysatoranordnungen (2) parallel zueinander angeordnet sind.

8. Rekombinationseinrichtung nach Anspruch 7,
**dadurch gekennzeichnet, daß** die Katalysatoranordnungen (2) plattenförmig ausgebildet sind, jewells eine Gesamtdicke von höchstens 1 cm, vorzugsweise 0,3 mm, besitzen und nebeneinander mit einem gegenseitigen Abstand von weniger als 20 mm angeordnet sind.

9. Rekombinationseinrichtung nach einem der Ansprüche 1 bis
**dadurch gekennzeichnet, daß** in Anstromrichtung des Gasgemisches am Vorderende der Katalysatoranordnung (2) ein Aufwindschutz (10) vorgesehen ist.

10. Rekombinationseinrichtung nach einem der Ansprüche 1 bis 9,
**dadurch gekennzeichnet, daß** in Abstromrichtung des Gasgemisches am Ende der Katalysatoranordnung (2) ein Abwindschutz (12) angeordnet ist.

## Claims

1. Recombination device for the catalytic recombination of hydrogen and/or carbon monoxide with oxygen in a gas mixture, in which at least one catalyst arrangement (2) is arranged in a housing (4) through which the gas mixture can flow in operation, the catalyst arrangement (2) having a plurality of subregions (T1, T2) as seen in the direction of flow of the gas mixture, **characterized in that**, as seen in the incoming direction of flow, the first subregion (T1) comprises a catalyst body (6) with a surrounding throttling layer (8) for inhibiting the diffusion of the reaction gases flowing in and/or out, and the second subregion (T2), which adjoins the first subregion (T1), comprises at least one catalyst body (6) which is directly accessible to the reaction gases.

2. Recombination device according to Claim 1, **characterized in that** the catalyst body (6) in the second subregion (T2) has a higher activity than the catalyst body (6) in the first subregion (T1).

3. Recombination device according to Claim 1 or 2, **characterized in that** the catalyst body (6) in the second subregion (T2) comprises a metal support plate which is coated with a catalyst material.

4. Recombination device according to Claim 3, **characterized in that** the catalyst material contains a catalytic precious metal, in particular platinum or palladium.

5. Recombination device according to one of Claims 1 to 4, **characterized in that** the throttling layer (8) which is in particular porous in form, in the first subregion (T1) is a bulk bed in which the catalyst body (6) is arranged.

6. Recombination device according to one of Claims 1 to 4, **characterized in that** the throttling layer (8) in the first subregion (T1) is applied to the catalyst body (6) as a porous covering layer.

7. Recombination device according to one of Claims 1 to 6, **characterized in that** a plurality of identical catalyst arrangements (2) are arranged in parallel with one another.

8. Recombination device according to Claim 7, **characterized in that** the catalyst arrangements (2) are designed in plate form, each have a total thickness of at most 1 cm, preferably 0.3 mm, and are arranged next to one another, with a distance of less than 20 mm between them.

9. Recombination device according to one of Claims 1 to 8, **characterized in that** an upwind protector (10) is arranged at the front end of the catalyst arrangement (2), in the inflow direction of the gas mixture.

10. Recombination device according to one of Claims 1 to 9, **characterized in that** a downwind protector (12) is arranged at the end of the catalyst arrangement (2) in the outflow direction of the gas mixture.

## Revendications

1. Dispositif de recombinaison catalytique de l'hydrogène et/ou du monoxyde de carbone à de l'oxygène d'un mélange gazeux, dans lequel au moins un dispositif (2) à pot catalytique est disposé dans une enveloppe (4) qui peut être parcourue en fonctionnement par le mélange gazeux, le dispositif (2) à pot catalytique ayant, considéré dans la direction du courant du mélange gazeux, plusieurs sous-zones (T1, T2),
**caractérisé en ce que** dans la direction d'afflux, la première sous-zone (T1) a un corps (6) de pot catalytique ayant une couche (8) entourante d'étranglement pour inhiber la diffusion des gaz de réaction arrivant et/ou partant et la deuxième sous-zone (T2) se raccordant à la première sous-zone (T1) comprend au moins un corps (6) de pot catalytique accessible directement aux gaz de réaction.

2. Dispositif de recombinaison suivant la revendication 1, **caractérisé en ce que** le corps (6) du pot catalytique a dans la deuxième sous-zone (T2) une activité plus grande que le corps (6) du pot catalytique dans la première sous-zone (T1).

3. Dispositif de recombinaison suivant la revendication 1 ou 2, **caractérisé en ce que** le corps (6) de pot catalytique comprend dans la deuxième sous-zone (T2) une tôle support en forme de plaque qui est revêtue d'une substance servant de catalyseur.

4. Dispositif de recombinaison suivant la revendication 3, **caractérisé en ce que** la substance servant de catalyseur contient un métal précieux catalytique, notamment du platine ou du palladium.

5. Dispositif de recombinaison suivant l'une des revendications 1 à 4, **caractérisé en ce que**, dans la première sous-zone (T1), la couche (8) d'étranglement, qui est notamment sous forme poreuse, est un amas, dans lequel le corps (6) du pot catalytique est disposé.

6. Dispositif de recombinaison suivant l'une des revendications 1 à 4, **caractérisé en ce que**, dans la première sous-zone (T1), la couche (8) d'étranglement est déposée sur le corps (6) du pot catalytique sous la forme d'une couche supérieure poreuse.

7. Dispositif de recombinaison suivant l'une des revendications 1 à 6, **caractérisé en ce que** plusieurs dispositifs (2) à pot catalytique de même type sont montés en parallèle.

8. Dispositif de recombinaison suivant la revendication 7, **caractérisé en ce que** les dispositifs (2) à pot catalytique sont constitués sous forme de plaque, ont respectivement une épaisseur totale de 1 cm au plus, de préférence de 3,3 mm, et sont disposés côte à côte à un intervalle mutuel de moins de 20 mm.

9. Dispositif de recombinaison suivant l'une des revendications 1 à 8, **caractérisé en ce que**, dans la direction d'afflux du mélange gazeux, il est prévu à une extrémité avant du dispositif (2) à pot catalytique une protection (10) vis-à-vis de l'entrée d'un courant d'air.

10. Dispositif de recombinaison suivant l'une des revendications 1 à 9, **caractérisé en ce qu'**il est monté dans la direction d'évacuation du mélange gazeux à l'extrémité du dispositif (2) à pot catalytique une protection (12) vis-à-vis de la sortie d'un courant d'air.
